# EUROPÄISCHE PATENTANMELDUNG

(11) **EP 1 902 605 A1**
(43) Veröffentlichungstag der Anmeldung: **26.03.2008**
(21) Anmeldenummer: 07018036.9
(22) Anmeldetag: 14.09.2007
(51) Int. Cl.: A01B 63/10, A01D 34/66

(54) **Mähmaschine**

(30) Priorität: 22.09.2006 DE 102006045270
(71) Anmelder: CLAAS Saulgau GmbH, 88348 Bad Saulgau (DE)
(72) Erfinder: Altepost, Dietmar, 48477 Hörstel-Riesenbeck (DE); Altepost, Helmut, 48477 Hörstel-Riesenbeck (DE); Prenzler, Jürgen, 88379 Unterwaldhausen (DE)

(57) **Zusammenfassung**

Steuerungsaufbau als Steuerungsvorrichtung für ein Mähwerk zum Ernten von am Boden wachsenden Grünfutter bestehend aus wenigstens zwei Mäheinheiten mit um aufrechte Achsen umlaufend angetriebenen Mähwerkzeugen, deren Mäheinheiten sich am Fahrgestell eines Trägerfahrzeugs abstützen und die von einer bodennahen in eine bodenfernere Lage und umgekehrt bewegt werden können, wobei der Steuerungsaufbau vorsieht, dass wenigstens eine Mäheinheit (3;2:2;16;16') einen Sensor (33;33';45;45') aufweist, der infolge einer auf die wenigstens eine Mäheinheit (16,16') einwirkende Verschiebekraft als Folge des Bodenkontaktes oder eines sonstigen Hindernis (44) hervorrufenden Verschiebewiderstands ein Eingangssignal (36;36';45;45') für einen µ-Contoller (34) generiert, der dieses wenigstens eine Eingangssignal mit einem Schwellwert (S,S₂) vergleicht und der Pegel des Eingangssignals (36;36';45;45') den Pegel des Schwellwerts (S;S₂) erreicht oder überschreitet, der µ-Contoller (34) ein Ausgangssignal (37) zur Betätigung eines Aktors generiert, welcher wenigstens eine Mäheinheit (3;2:2;16;16') von der bodennahen Lage in eine bodenfernere Lage überführt.

## Beschreibung

Die Erfindung betrifft einen Steuerungsaufbau für eine Mähmaschine gemäss dem gattungsbildenden Oberbegriff des Anspruchs 1.

Es sind Mähwerke mit großen Arbeitsbreiten bekannt und insbesondere auch solche, ausgebildet als selbstfahrende mobile Arbeitsmaschinen unter dem Begriff selbstfahrende Mähwerke bzw. Mähmaschinen, die vornehmlich im Bereich der Landwirtschaft zum Mähen von Grünfutter eingesetzt werden. Derartige Großflächenmäher sind beispielsweise in dem Werbeprospekt "Scheibenmähwerke DISCO" (Ausgabe 08/05) der Firma CLAAS (siehe COUGAR 1400 oder DISCO 8550/8550 C)) beschrieben.

Diese bestehen im wesentlichen aus einem Trägerfahrzeug mit Fahrgestell und motorischem Antrieb sowie den zugehörigen Antriebskomponenten zur Erzeugung der Traktionskräfte, dem Führerhaus mit Lenk- und Steuereinrichtungen, sowie einem mechanischen aus Getrieben und Gelenkwellen bestehenden Energieverzweigungssystem zum Antrieb der Mäheinheiten und Energieversorgungssysteme elektrischer und hydraulischer Art.

Erzeugt wird die Gesamtarbeitsbreite derartiger selbstfahrender Mähwerke bzw. Mähmaschinen aus der Kombination und dem Zusammenwirken von mehreren Mäheinheiten, insbesondere durch eine Kombination von Front- und Seitenmäheinheiten, die als Kreiselmähwerke ausgebildet sind. Die Gesamtarbeitsbreite derartiger selbstfahrender Mähwerke ergibt sich somit additiv aus den Einzelarbeitsbreiten dieser zusammenwirkenden Mäheinheiten.

Dabei sind Kombinationen von Mäheinheiten bekannt, die aus Front- und Seitenmähwerken bestehen, die beidseitig zur Längsmittelachse des Trägerfahrzeugs angeordnet sind. Eine Kombination dieser Art kann beispielsweise ausschließlich frontseitig im Frontanbauraum, oder auch aufgelöst derart sein, dass im Frontanbauraum ausschließlich ein Frontmähwerk, im Zwischenachsanbauraum beidseitig je ein Seitenmähwerk oder im Heckanbauraum zwei Seitenmähwerke angebaut sind.

Dabei müssen derartige selbstfahrende Arbeitsmaschinen durch ihre konstruktive Ausgestaltung auch die Voraussetzungen beinhalten, dass sie in den verschiedenen Betriebszuständen sicher beherrschbar sind, welches wegen ihrer Größe erhöhte Anforderungen an die Aufmerksamkeit des Fahrers stellt. Große selbstfahrende Mähmaschinen weisen beispielsweise fünf Mäheinheiten, davon einige im Frontbereich, einige im Zwischenachsbauraum und einige im Heckanbauraum auf. Da die zu mähenden Flächen nicht immer planeben sind, kann es vorkommen, dass die Mähbalken mit den rotierenden Mähwerkzeugen ins Erdreich, beispielsweise in Bodenkuppen, eindringen, d.h. diese die Grasnabe beschädigen. Bei der Vielzahl der Mäheinheiten und ihrer räumlichen Anordnung zueinander ist es schwierig gerade in hochaufgewachsenem Futter dieses immer vorherzusehen um eventuelle Gegenmaßnahmen rechtzeitig einzuleiten.

Hier setzt die erfinderische Aufgabenstellung an, mit dem Ziel, den Fahrer im laufenden Mähbetrieb zu entlasten, so dass er sich möglichtst nur auf seine Lenkaufgabe während des Mähens konzentrieren kann.

Aufgabe der Erfindung ist es demzufolge einen Steuerungsaufbau im Sinne einer Vorrichtung vorzuschlagen, die verhindert, dass bei in Arbeitsstellung abgesenkten Mähwerken, die mit dem Boden in Berührungskontakt stehen, diese während der Vorwärts- oder Rückwärtsbewegung nicht in den Boden eindringen und dadurch die Graßnabe beschädigen können.

Gelöst wird die Aufgabe der Erfindung mit den kennzeichnenden Merkmalen des unabhängigen Hauptanspruchs. Weitere vorteilhafte Ausgestaltungen der Erfindung sind den abhängigen Ansprüchen, der Beschreibung und den Figurendarstellungen zu entnehmen.

Eine Mähmaschine oder ein Mähwerk nach der Erfindung besteht aus einem selbstfahrenden Trägerfahrzeug mit mehreren Mäheinheiten, die vorzugsweise in aufgelöster Bauweise mit dem Trägerfahrzeug in Wirkverbindung stehen.

Die Mäheinheiten können beispielsweise frontseitig und/oder seitlich im Zwischenachsbauraum und oder heckseitig vorzugsweise in Klappgelenken von dem Trägerfahrzeug aufgenommen mit dem Fahrgestell verbunden sein. Ausführungsformen dieser Art sind dem Fachmann hinlänglich bekannt und sie bedürfen daher an dieser Stelle keiner weiteren eingehenden Beschreibungen.

Die Mäheinheiten werden im Betriebszustand von Gleitkufen gegenüber dem Boden abgestützt. Dabei sind diese meistens so ausgestaltet, dass die Gleitkufen in Richtung der Vorwärtsfahrt über eine Auflaufschräge verfügen, so dass diese in der Vorwärtsfahrt Hindernisse, wie kleine Bodenerhebungen bodenschonend übergleiten können, ohne dass sie dabei die Graßnabe nennenswert beschädigen.

Bei der Rückwärtsfahrt, z.B. am Vorgewende, allerdings verbleit die Gefahr, dass die Grasnabe trotz der getroffenen Vorkehrungen für die Vorwärtsfahrt beschädigt werden kann, da die Gleitkufen aufgrund konstruktiver Randbedingungen am hinteren Ende höher sind und somit über gleich günstigen Gleiteigenschaften des Übergleitens von Hindernisse bei der Rückwärtsfahrt nicht verfügen. Demzufolge können auch die dann erforderlichen Verschiebekräfte in der Rückwärtsfahrt erheblich größer sein, als vergleichsweise die der Vorwärtsfahrt, wobei diese zudem in der Rückwärtsfahrt gegenüber der Vorwärtsfahrt ihre Wirkungsrichtung umkehren.

Erfindungsgemäß wird an wenigstens eine Mäheinheit des Mähwerks die Verschiebekraft unter Beachtung der Wirkungsrichtung sensorisch erfasst und bei Überschreitung eines vorgegebenen Schwellwertes wird ein Eingangssignal für die Steuerung zur Anhebung eines oder aller Mäheinheiten generiert, wobei dieses der Auslöser dafür sein kann, dass alle Mähwerke des selbstfahrenden Mähwerks automatisch vom Boden abgehoben und in einer Zwischenstellung vorübergehend geparkt werden, wodurch eben eine Beschädigung der Grasnabe vermieden wird. Die Anhebung der Mäheinheiten erfolgt vorzugsweise durch hydraulisch betätigte Antriebselemente insbesondere durch Hydraulikzylinder.

Eine besonders vorteilhafte, weil kostengünstige Lösung kann erfindungsgemäß in Verbindung mit einer hydraulischen Anfahrsicherung geschaffen werden. Dieses deshalb, weil an dem Druckraum des Hydraulikzylinders, an dem sich die zu überwachende Aktionskraft abstützt, ein Drucksensor angelegt werden kann, der dann ein Eingangssignal, z.B. für einen µ-Controller generiert, der dieses Signal dann mit einem vorgegebenen Schwellwert vergleicht.

Bei Erreichen des Schwellwerts erzeugt dieser dann ein Ausgangssignal für den Aktor einer Aushubsteuerung, welche dann die Mäheinheit oder Mäheinheiten vom Boden abhebt, wodurch die Beschädigung der Grasnabe unterbunden wird.

Dieses gilt primär für die Rückwärtsfahrt, kann aber prinzipiell auch für beide Richtungen, also auch für die Vorwärtsfahrt, genutzt werden.

Dabei können bei Auslegung der Steuerung entweder einzelne betroffene Mähwerke, einzelne Mähwerksgruppen oder alle Mähwerke momentan vom Boden abgehoben werden.

In Verbindung mit einem Mikrokontroller können diese Kontrollfunktionen in besonders einfacher Weise überwacht und gesteuert werden, so dass der Fahrer dadurch in seiner Kontrollfunktion entlastet wird und er seine Aufmerksamkeit dem Betriebszustand als Ganzes distributiver widmen kann, ohne sich auf derartige Vorkommnisse ständig für den manuellen Eingriff bereit halten zu müssen.

In dem nachfolgenden Ausführungsbeispiel wird die Erfindung eingehender und ausführlicher anhand einer hydraulischen Überlast- und. Anfahrsicherung dargelegt.

### Bezugszeichenliste

- 1: Trägerfahrzeug
- 2,2': Seitenmäheinheit
- 3: Frontmäheinheit
- 4: Mähbalken
- 5: Aufbereiter
- 6: Frontanbauraum
- 7,7': Zwischenachsanbauraum
- 8: Vorderachse
- 9: Hinterachse
- 10: vertikale Hauptlängsmittelebene
- 11: Fahrgestell
- 12,12': horizontales Klappgelenk
- 13,13': Schwenkachse
- 14,14': Anfahr- und Überlastsicherung
- 15: Frontmähwerkskombination
- 16,16': Seitenmäheinheit
- 17,17': längenveränderbarer Ausleger
- 18,18': Kniegelenk
- 19: Hydraulikzylinder
- 20,20': Anschlagpunkt
- 21,21': Anschlagpunkt
- 22: Kolbenstange
- 23: Kolbenstange
- 24: Trennwand
- 25: Kolbenbodenraum
- 26: Kolbenstangenraum
- 27: Kolbenbodenraum
- 28: Kolbenstangenraum
- 29: Druckbegrenzungsventil
- 30: Druckbegrenzungsventil
- 31: Rückschlagventil
- 32: Rückschlagventil
- 33,33': Drucksensor
- 34: p - Controller
- 35: BUS
- 36,36': Eingangssignal
- 37: Ausgangssignal
- 37₂: Ausgangssignal
- 37_{2'}: Ausgangssignal
- 37₃: Ausgangssignal
- 37₁₆: Ausgangssignal
- 37_{16'}: Ausgangssignal
- 38,38': Wegeventil
- 39,39': Wegeventil
- 40: Großflächenmähwerk
- 41: Fahrerkabine (Führerstand)
- 42: Zylinderkopf
- 43: Zylinderkopf
- 44: Hindernis
- 45,45': Drucksensor
- 46,46': Eingangssignal

- F,F': Fahrtrichtung
- +K_{V},-K'_{V}: Verschiebekraft
- +K_{V1},-K'_{V1}: Verschiebekraft
- K_{V2},K'_{V2}: Verschiebekraft
- K_{V3} K'_{V3}: Verschiebekraft
- P: hydrostatischer Druck
- P₂₉: hydrostatischer Druck
- P₃₀: hydrostatischer Druck
- R: Hebelarm
- S,S₂: Schwellwert
- U: elektrisches Spannungssignal

### Ausführungsbeispiel

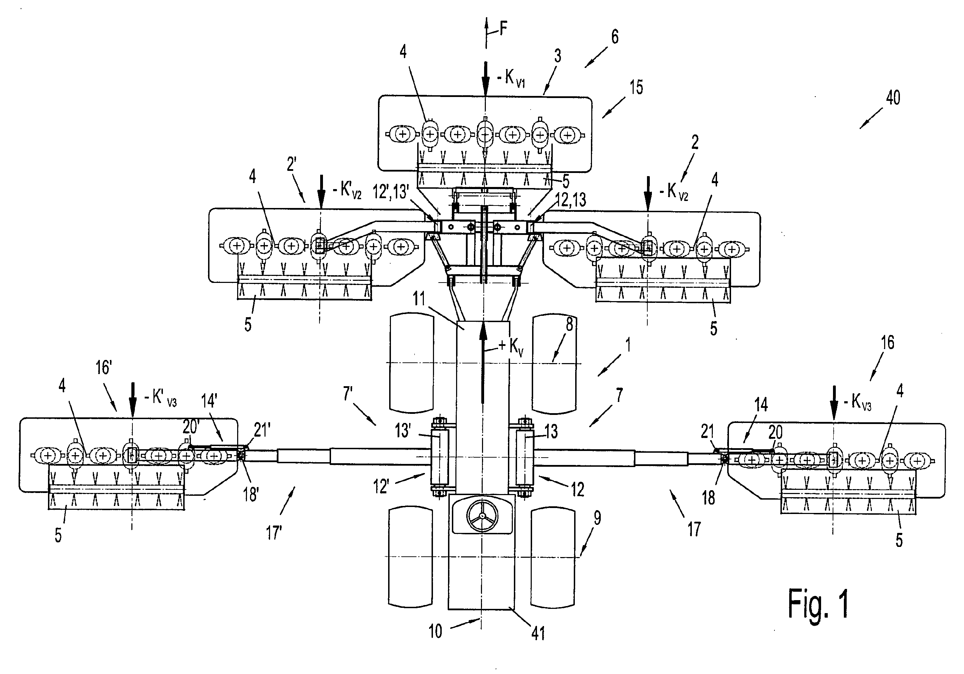

- Fig. 1: zeigt ein Ausführungsbeispiel eines selbstfahrenden Mähwerks nach der Erfindung in einer Draufsicht in Arbeitsposition in Vorwärtsfahrt.
- Fig. 1: zeigt ein Ausführungsbeispiel eines selbstfahrenden Mähwerks nach der Erfindung in einer Draufsicht in Arbeitsposition in Rückwärtsfahrt.
- Fig. 3: zeigt ein Seitenmähwerk mit Seitenausleger im Zwischenachsbauraum des Trägerfahrzeugs mit der dort angreifenden Verschiebkraft in der Vorwärtsfahrt gemäß Fig.1 in vergrößerter Darstellung.
- Fig. 4: zeigt ein Seitenmähwerk mit Seitenausleger im Zwischenachsbauraum des Trägerfahrzeugs mit der dort angreifenden Verschiebkraft in der Rückwärtsfahrt gemäß Fig.2 in vergrößerter Darstellung.
- Fig. 5: zeigt ein Schaltbild für einen Steuerungsaufbau
- Fig. 5a: zeigt ein erweitertes Schaltbild für einen erfindungsgemäßen Steuerungsaufbau basierend auf Fig. 5
- Fig. 5b: zeigt ein erweitertes Schaltbild für einen Steuerungsaufbau gemäß Fig. 5a
- Fig. 6: zeigt eine Situation einer Seitenmäheinheit bei angesprochener Überlastsicherung in der Vorwärtsfahrt
- Fig. 7: zeigt eine Situation einer Seitenmäheinheit vor dem Verklappen in eine abgewinkelte Transportposition

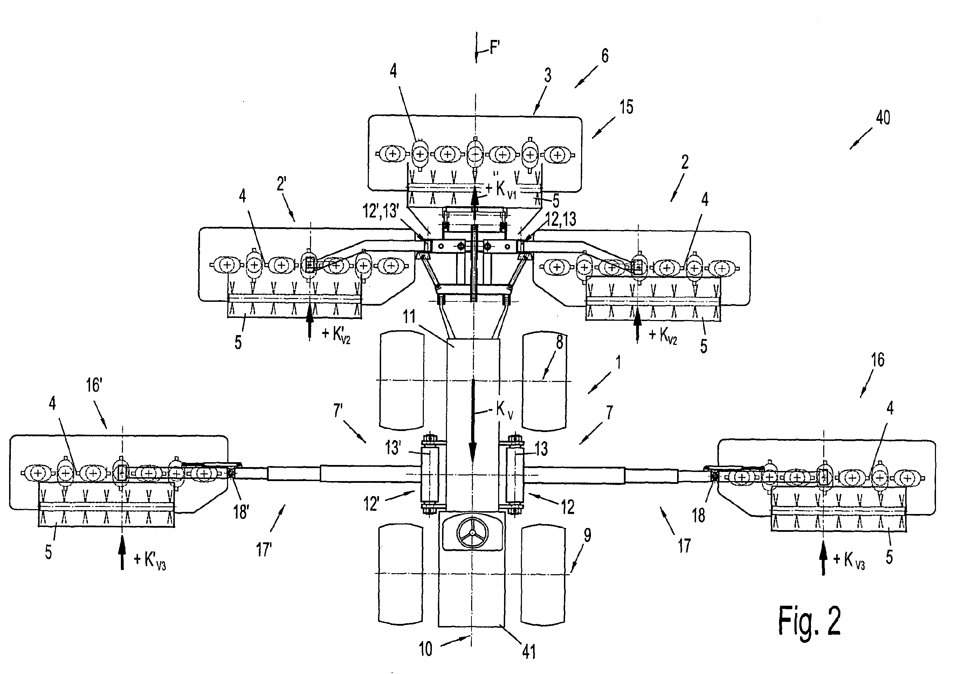

In Fig.1 ist ein Großflächenmähwerk 40 am Beispiel eines selbstfahrenden Mähwerks in einer an sich bekannten Ausführung in Arbeitsstellung in Geradeausfahrt in Fahrtrichtung F in einer Draufsicht auf die Arbeitsebene und in Fig.2 in einer Rückwärtsfahrt mit der Fahrtrichtung F' dargestellt. Dieses umfasst im Wesentlichen das Trägerfahrzeug 1, eine im Frontanbauraum 6 befindliche Frontmähwerkskombination 15 bestehend aus einer Frontmäheinheit 3 und zwei gestaffelt nachgeordneten Seitenmäheinheiten 2,2', und zwei der Frontmäheinheit 3 gestaffelt nachgeordneten Seitenmäheinheiten 16,16' im Zwischenachsbauraum 7,7' zwischen Vorderachse 8 und Hinterachse 9 des Trägerfahrzeugs 1. Alle Mäheinheiten 2,2',3,16,16' stellen in ihrer Gesamtheit eine Mähwerkskombination, die ein Großflächenmähwerk 40 mit einer Gesamtarbeitsbreite von beispielsweise 14 Metern bildet, dar.

Wegen ihrer leichten Bauweise sind die Mähbalken 4 der Mäheinheiten vorteilhafterweise als Scheibenmähwerke mit um aufrechte Achsen umlaufend angetriebenen Mähscheiben ausgebildet und sie können dabei auch zusätzlich mit Aufbereitern 5 und/oder auch nicht dargestellten Schwadversetzern, welche die Maden mehrerer Mäheinheiten zusammenlegen, ausgestattet sein.

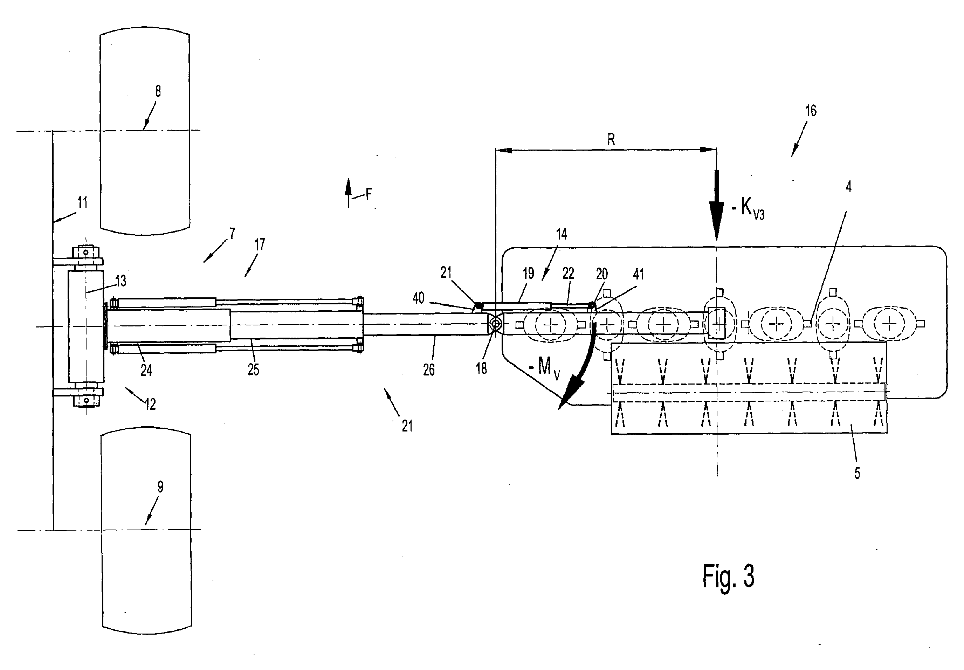

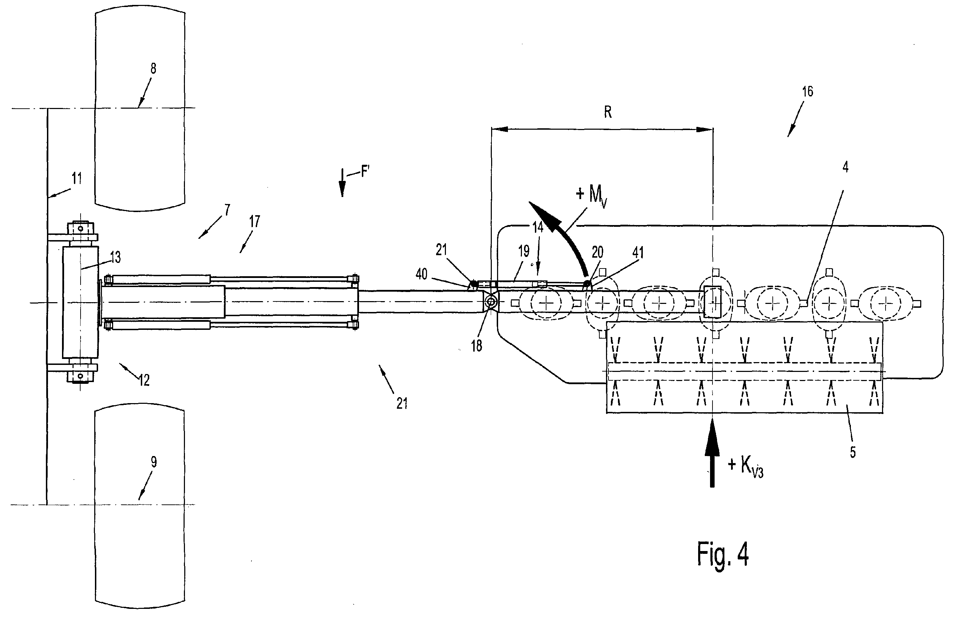

Fig. 3 zeigt einen vergrößerten Ausschnitt aus Fig.1, Fig. 4 einen vergrößerten Ausschnitt aus Fig.2, und dabei beispielhaft und zur näheren Erläuterung die rechte Seitenmäheinheit 16 als Seitenmähwerk ausgebildet mit dessen längenveränderbarem Ausleger 17 im Zwischenachsbauraum 7 des Trägerfahrzeugs 1. Die Mäheinheit 16' mit dem Ausleger 17' im Zwischenachsbauraum 7' ist gespiegelt um die Hauptlängsmittelebene analog der Mäheinheit 16 ausgebildet

In Fig. 1 sind zum besseren Verständnis der Erfindung die wesentlichen Verschiebekräfte -K_{V1},-K_{V2},-K'_{V2},-K_{V3},-K'_{V3}, welche auf die Mäheinheiten in der Vorwärtsfahrt einwirken nach den Prinzipien der Vektoranalysis dargestellt. Der Vortriebskraft +K_{V} als Aktionskraft, ausgehend vom Trägerfahrzeug 1, sind die Verschiebekräfte +K_{V1},K_{V2},K'_{V2},K_{V3},K'_{V3} als Wiederstandskräfte entgegen gerichtet, welche die Mäheinheiten der Bewegung im Wesentlichen durch die Bodenreibung entgegen setzen.

Fig. 2 zeigt analog die Situation in der Rückwärtsfahrt, welche gekennzeichnet ist durch den Fahrtrichtungspfeil -F, wodurch sich die Wirkungsrichtungen der Verschiebekräfte +K_{V1},+K_{V2},+K'_{V2},+K_{V3},+K'_{V3} umkehren, welches durch die Änderung der Vorzeichen der Kraftvektoren symbolisch dargestellt ist.

Fig.3 zeigt die Situation gemäß Fig. 1 an der Mäheinheit 16 während der Vorwärtsbewegung in Fahrtrichtung F. Dabei stützt sich der Auslegerarm 17 am Trägerfahrzeug 1 ab. Die Verschiebekraft -K_{V3} verursacht ein Biegemoment -M_{V} an der Einspannstelle des Auslegers 17 bzw. 17' am Trägerfahrzeug 1, welches von dem horizontalen Klappgelenk 12 bzw. 12' mit der Schwenkachse 13,13' vom Fahrgestell 11 aufgenommen und abgestützt wird.

Fig.4 zeigt die Situation gemäß Fig. 2 an der Mäheinheit 16 während der Rückwärtsfahrt in Fahrtrichtung F'. Dabei stützt sich der Auslegerarm 17 ebenfalls in dem Klappgelenk 12 am Fahrgestell des Trägerfahrzeugs 1 ab. Die Verschiebekraft +K_{V3} hat gegenüber der Vorwärtsfahrt ihre Wirkungsrichtung umgekehrt und verursacht ein Biegemoment +M_{V} um die Hochachse des Kniegelenks 18, welches von dem Hydraulikzylinder 19 abgestützt werden muss.

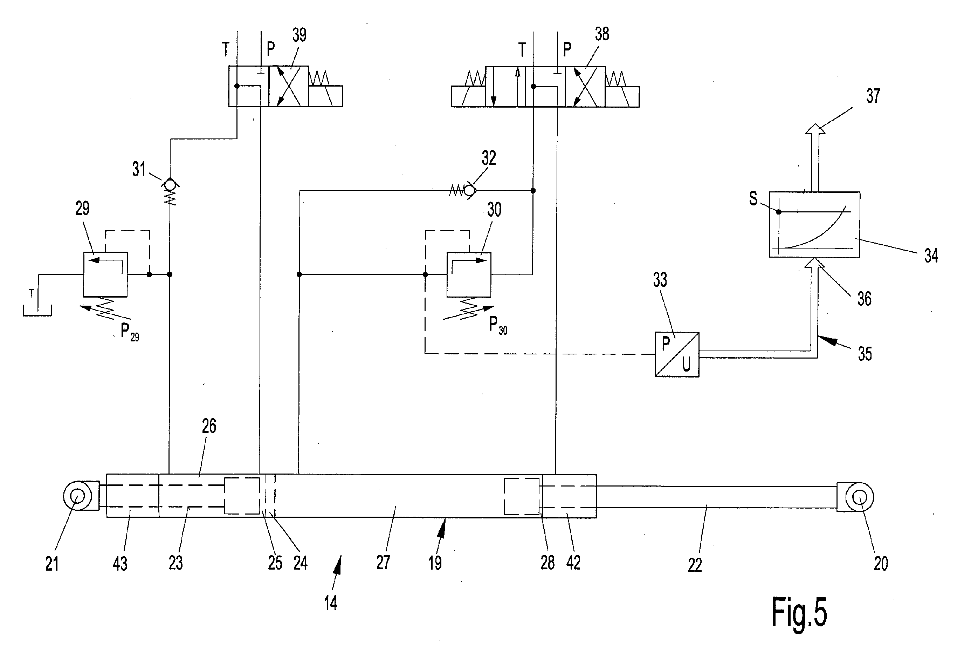

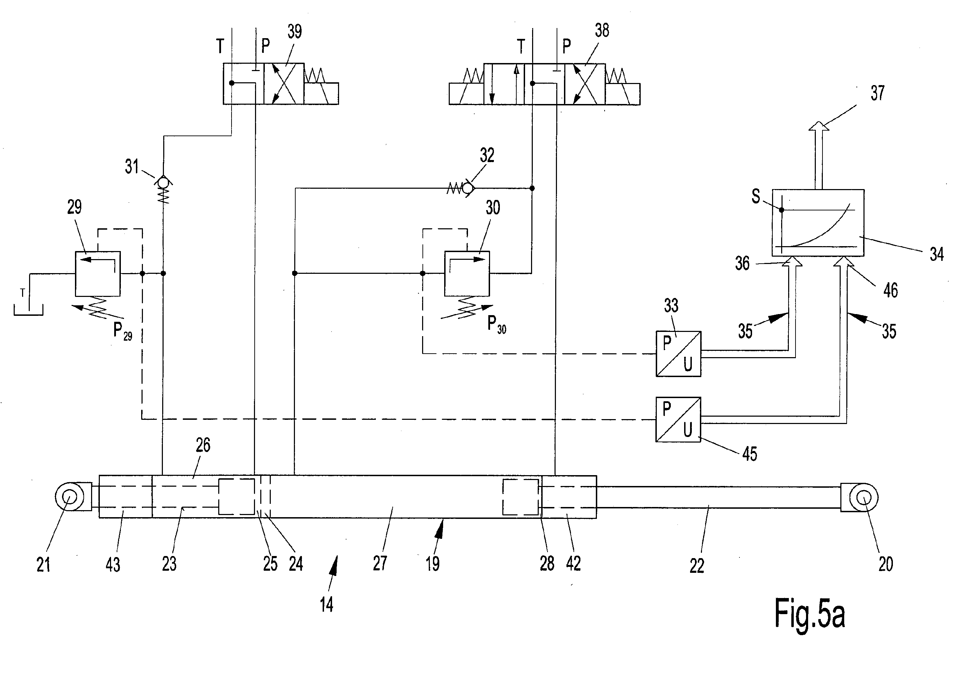

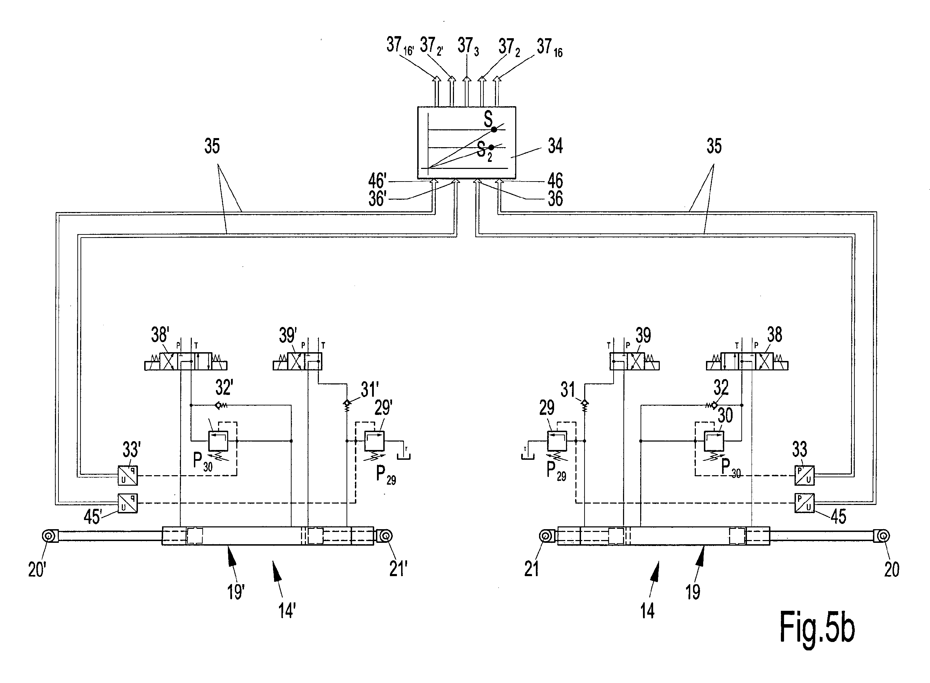

Fig. 5 zeigt ein vereinfacht dargestelltes Schaltbild für einen Steuerungsaufbau zur Beschaltung des Hydraulikzylinders 19 für das dargelegte Ausführungsbeispiel.

Der Hydraulikzylinder 19,19' übernimmt dabei Mehrfachfunktionen, die in verschiedenen Betriebssituationen, nämlich der Vorwärtsfahrt, der Rückwärtsfahrt oder der Transportfahrt aktiv sind bzw. in Anspruch genommen werden.

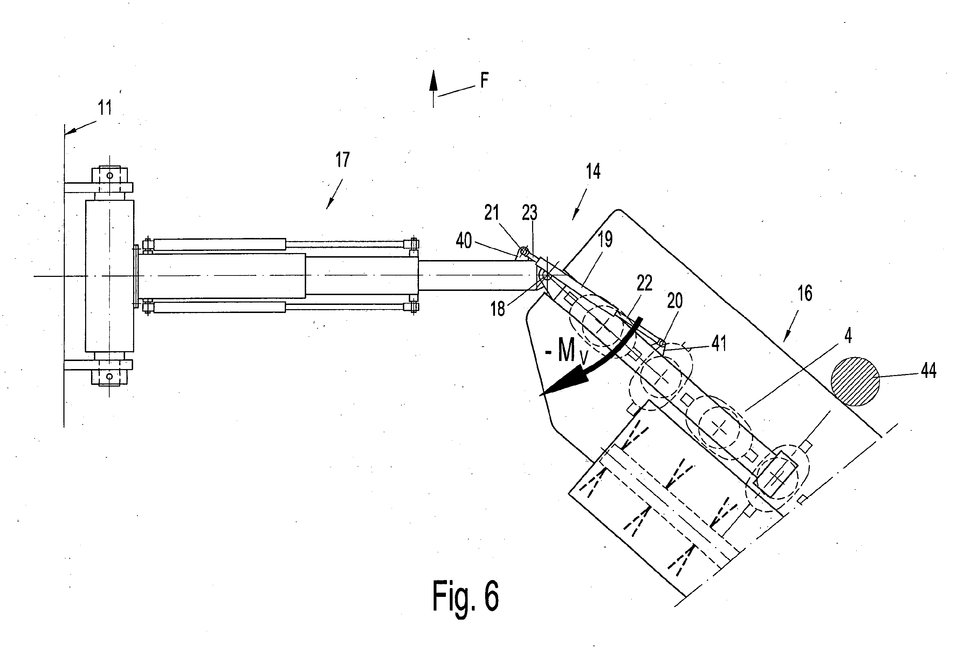

Die am weitesten außen liegenden Mäheinheiten 16,16' sind in der Vorwärtsfahrt mit einer Anfahrsicherung 14 gegen Zaunpfähle oder andere Hindernisse ausgestattet. Fig. 6 veranschaulicht eine Crash-Situation, in der eine Mäheinheit 16,16' ein Hindernis 44 angefahren hat.

Dazu befindet sich an der Innenseite der jeweiligen Mäheinheit 16,16' ein Kniegelenk 18,18', welches jeweils von einem Hydraulikzylinder 19 überbrückt ist.

Der Hydraulikzylinder 19 nimmt zwei Kolbenstangen 22,23 mit Differentialkolben in sich auf, wobei die beiden Kolbenstangen 22,23 und die Kolbenbodendruckräume 25,27 durch eine druckdichte Trennwand 24 im Inneren des Hydraulikzylinders 19 voneinander getrennt sind. Die Kolbenstangendruckräume 26,28 sind den Enden des Hydraulikzylinders 19, an denen die Kolbenstangen 22,23 herausgeführt sind, zugewand. An den Enden der Kolbenstangen 22,23 befinden sich Gelenkaugen als Anschlagpunkte 20,21, die von den Konsolen 40,41 als Widerlager zum einen an dem Ausleger und zum anderen an der Mäheinheit 16 bzw. 16' aufgenommen werden.

Die Kolbenstange 23 des Hydraulikzylinders 19 ist mittels eines Druckbegrenzungsventils 29 und eines Rückschlagventils 31 im Normalbetrieb eingespannt. Im Falle einer Kollision, z.B. mit einem Zaunpfahl, findet ein momentaner Kraftanstieg der Horizontalkraft -K_{V3} statt, und somit erhöht sich in Folge des Hebelarms R auch das Drehmoment -M_{V}, so dass dieser Anstieg von dem Hydraulikzylinder 19 als Stützkraft aufgenommen werden muss. Die Stützkraft stützt sich dabei auch auf der Kolbenringseite 26 im Kolbenstangenraum 26 auf der Ölsäule und damit zum einen auf das Rückschlagventil 31 und zum anderen auf dem Druckbegrenzungsventil 29 ab. Erhöht sich dabei der Druck P über den eingestellten Öffnungsdruck P₂₉ des Druckbegrenzungsventils 29, so öffnet dieses und die Mäheinheit 16 bzw. 16' kann um die Schwenkachse des Kniegelenks 18 nach hinten und entgegen der Fahrtrichtung ausweichen, in dem die Kolbenstange 23 aus dem Zylindergehäuse soweit ausfahren kann, bis dass sie an den Zylinderkopf 43 zum Anschlag kommt. Mit dem Wegeventil 39 kann die Kolbenstange 23 nach dem Passieren bzw. sich entfernen vom dem Hindernis 44 wieder eingefahren und somit die Mäheinheit 16,16' wieder in ihre Ausgangssituation zurück bewegt werden. Die Kolbenstange 22 hingegen bleibt während dieses Vorgangs in ihrer Lage eingespannt, da sie beim Auftreffen des Mähwerks auf ein Hindernis während der Vorwärtsfahrt auf Zug beansprucht wird und dabei in ihrer voll ausgefahrenen Lage am Inneren des Zylinderkopfes 42 anliegt, wobei der Kolben sich kolbenbodenseitig auf der Ölsäule des Kolbenbodenraums 27 und damit auf dem Rückschlagventil 32 und dem Druckbegrenzungsventil 30 quasi drucklos abstützt.

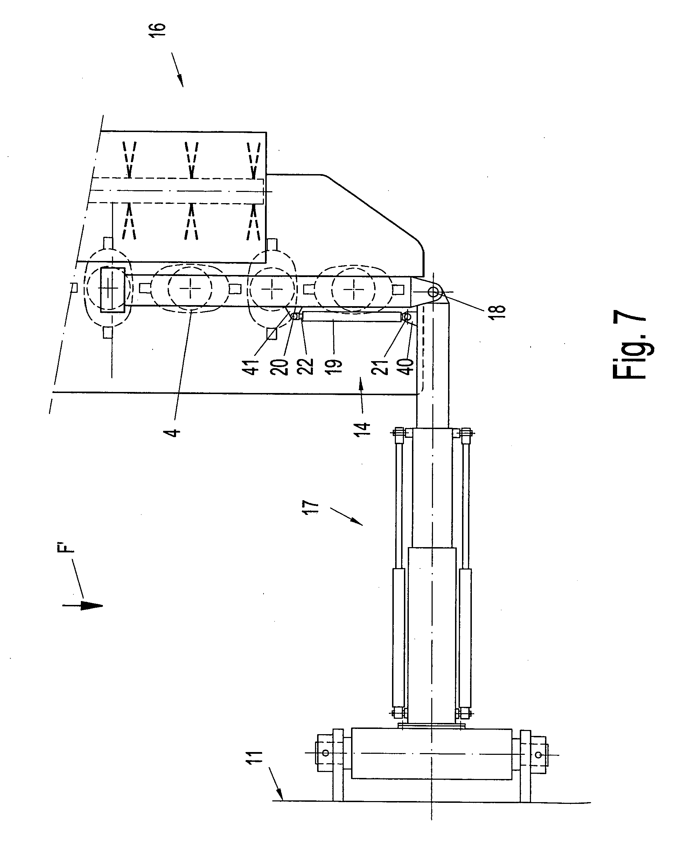

Anders hingegen stellt sich - wie in Fig. 2 dargestellt - die Situation für den Hydraulikzylinder 19,19' während der Rückwärtsfahrt F' dar, da sich dann die Belastungsfunktion für den Hydraulikzylinder 19,19' gegenüber der Vorwärtsfahrt umkehrt, so dass ihm die Funktion einer Druckstrebe aufgezwungen wird, damit nämlich sich die Mäheinheit nicht um die Hochachse des Kniegelenks in Folge des Drehmoments +M_{V} bewegen d.h. verschwenken kann. Dieses bedingt die Umkehrung der Wirkungsrichtung der Verschiebekraft +K_{V3} gegenüber der Verschiebekraft -K_{V3} während der Vorwärtsfahrt, wie dieses in der Fig.4 veranschaulicht ist. Infolgedessen kehren sich auch die Reaktionen im hydraulischen System des Hydraulikzylinders 19 um, indem die Kolbenstange 22 sich nunmehr einer Druckbelastung ausgesetzt sieht und in das Innere des Kolbenbodenraums 27 des Hydraulikzylinders 19 einfahren möchte. Dem stellt sich jedoch die eingespannte Ölsäule des Kolbenbodenraums 27 entgegen, die sich einerseits auf der Trennwand 24 und andererseits auf dem Rückschlagventil 32 bzw. auf dem Druckbegrenzungsventil 30 abstützt. Dadurch baut sich ein hydrostatischer Reaktionsdruck P im Kolbenbodenraum 27 auf, der mit zunehmender Verschiebekraft +K_{V3} ansteigt und der von einem Drucksensor 33 abgegriffen wird und der beispielsweise in ein Spannungssignal U umgewandelt über einen Daten-BUS 35 dem Eingang eines µ-Controllers 34 als Eingangssignal 36 zugeführt wird. Dem Speicher des µ-Controllers 34 ist ein Schwellwert S zugeordnet, welcher ständig mit dem Eingangssignal 36 verglichen wird. Erreicht der Pegel des Eingangssignals 36 den Schwellwertpegel S, so wird von dem µ-Controller 34 ein Ausgangssignal 37 generiert, welches nunmehr einen nicht näher dargestellten Aktor, beispielsweise ein Steuerventil zur Betätigung eines hydraulischen Stellzylinders zum Ausheben einer oder mehrerer oder sämtlicher Mäheinheiten, ansteuert. Eine tatsächliche Verschiebung der Kolbenstange 22 tritt dabei jedoch nicht ein, solange der Reaktionsdruck P sich unterhalb des Öffnungsdrucks des Druckbegrenzungsventils 30 befindet. Sollte dabei das hydromechanische System der Anfahrsicherung im Falle des Auftreffens auf ein starres Hindernis zu träge sein, um das Hindernis durch das Abheben vom Boden zu überwinden, so kann bei Überschreitung des Öffnungsdrucks P₃₀ die betroffene Mäheinheit 16,16' entgegen der Fahrtrichtung F' ausweichen, d.h. um die Hochachse des Kniegelenks 18 entgegen der Fahrtrichtung F' ausweichen, so wie dieses in Fig. 7 dargestellt ist. Mit dem Wegeventil 38 kann die Mäheinheit 16,16' wieder in ihre Ausgangsposition zurück geführt werden.

Fig. 5a zeigt eine Erweiterung des Schaltplans gemäß Fig.5 um einen Drucksensor 45, der am Kolbenstangendruckraum 26 des Hydraulikzylinders 19,19' anliegt, und der über den Daten-BUS 35 ein weiteres Eingangssignal 46 an den µ-Controller 34 bereit stellt. Somit kann auch dieses Signal 46 von dem µ-Controller so interpretiert werden, dass bei Überschreitung eines hinterlegten Schwellwertes S₂ während der Vorwärtsfahrt in Fahrtrichtung F die betroffene Mäheinheit 16,16' nicht nur entgegen der Fahrtrichtung F nach hinten ausweichen, sondern gleichzeitig auch durch Generierung eines entsprechenden Ausgangssignals 37', welches dann einen Aktor, z.B. ein Wegeventil zur Betätigung eines nicht näher dargestellten Aushubzylinders zum Anheben des Auslegers 17,17' ansteuert.

Dieses ermöglicht momentan eine zweidimensionale Bewegungsform der ausweichenden Mäheinheit 16,16', nämlich die einer Ausweichbewegung nach hinten und die einer aufwärts nach oben gerichteten Bewegung.

Fig. 5b zeigt eine Erweiterung des Schaltplans gemäß Fig.5a dahingehend, dass der Steuerungsaufbau so gestaltet und erweitert ist, dass die Eingangssignale der Sensoren 33,33'45,45' derart logisch miteinander in Beziehung gebracht werden können, das ein µ-Controller 34 diese dann dazu nutzen kann, im laufenden Betriebszustand des Mähbetriebs permanent verschiedenste Schwellwertvergleiche durchzuführen, wobei die Programmierung so ausgelegt ist, dass der µ-Controller 34 aufgrund der anliegenden Eingangssignale 36,36',46,46' zwischen Vorwärts- F und Rückwärtsfahrt F' unterscheiden kann und dadurch bei Einsetzten der Rückwärtsfahrt mehrere Ausgangssignale, z.B. 37₁₆, 37_{16'}, 37₂, 37_{2'}, 37₃, generieren kann derart, dass z.B. je nach Konfiguration einer z.B. fernbedienbaren Voreinstellung aus der Fahrerkabine heraus, nur die beiden äußeren Mäheinheiten 16,16', oder die beiden äußeren Mäheinheiten 16,16' und die beiden mittleren Mäheinheiten 2,2', oder eben alle Mäheinheiten 3,2,2',16,16' von der bodennahen in eine bodenfernere Lage angehoben werden können.

Dabei können z.B. entweder die beiden äußeren Mäheinheiten 16,16' einzeln d.h. separat und zeitlich versetzt, oder alternativ beide zeitgleich, oder die beiden äußeren Mäheinheiten 16,16' und die beiden mittleren Mäheinheiten 2,2' zeitgleich, oder eben alle Mäheinheiten 3,2,2',16,16' gemeinsam und etwa zeitgleich vom Boden abgehoben werden.

Weitere Parameter, die die Konfiguration des Anhebens der Mäheinheiten mitbestimmen können, sind z.B. die Geradeausfahrt während der Rückwärtsfahrt, die Art der Kurvenfahrt nämlich eine Links- oder Rechtskurve unter Einbeziehung von Vorwärts- oder Rückwärtsfahrt und unter Einbeziehung des Lenkwinkels des Lenkrades des Trägerfahrzeugs (1), und dabei unter Einbeziehung der unterschiedlichen Größen der Verschiebewiderstände bzw. Verschiebekräfte, die von den Drucksensoren 33,33',45,45' erfasst werden. Dieses kann insbesondere dann von Vorteil genutzt werden, wenn Ecken an Grundstücksrändern ausgemäht werden und ein Teil der Mähwerk ohnehin vom Boden angehoben ist oder beispielsweise auch an Grundstücksrändern mit Hindermissen, die im Wege stehen.

Zudem können, wie in Fig.7 dargestellt, als weitere Funktion der Hydraulikzylinder 19,19' diese ihre Mäheinheit 16,16' vor dem Hochklappen in eine Transportposition verschwenken, wobei die Mäheinheiten 16,16' dazu um etwa 90° in Fahrtrichtung weisend nach vorn verschwenkt werden können. Dieses dient dazu, die Transporthöhe im hochgeklappten Zustand in an sich bekannter Weise zu reduzieren.

## Patentansprüche

1. Steuerungsaufbau als Steuerungsvorrichtung für ein Mähwerk zum Ernten von am Boden wachsenden Grünfutter bestehend aus wenigstens zwei Mäheinheiten mit um aufrechte Achsen umlaufend angetriebenen Mähwerkzeugen, deren Mäheinheiten sich am Fahrgestell eines Trägerfahrzeugs abstützen und die von einer bodennahen in eine bodenfernere Lage und umgekehrt bewegt werden können, **dadurch gekennzeichnet, dass** der Steuerungsaufbau vorsieht, dass wenigstens eine Mäheinheit (3;2:2;16;16') einen Sensor (33;33';45;45') aufweist, der infolge einer auf die wenigstens eine Seitenmäheinheit (16,16') einwirkende Verschiebekraft als Folge des Bodenkontaktes oder eines sonstigen Hindernis (44) hervorrufenden Verschiebewiderstands ein Eingangssignal (36;36';45;45') für einen µ-Contoller (34) generiert, der dieses wenigstens eine Eingangssignal mit einem Schwellwert (S,S₂) vergleicht und der Pegel des Eingangssignals (36;36';45;45') den Pegel des Schwellwerts (S;S₂) erreicht oder überschreitet, der µ-Contoller (34) ein Ausgangssignal (37) zur Betätigung eines Aktors generiert, welcher wenigstens eine Mäheinheit (3;2:2;16;16') von der bodennahen Lage in eine bodenfernere Lage überführt.

2. Steuerungsaufbau nach Anspruch 1, **dadurch gekennzeichnet, dass** die wenigstens eine Mäheinheit (16;16') einen ersten Sensor (33;33') und einen zweiten Sensor (45;45') aufweist, wobei der erste Sensor (33,33') eine Verschiebekraft mit einer Wirkungsrichtung entgegen der Fahrtrichtung (F) und der zweite Sensor eine Verschiebekraft mit einer Wirkungsrichtung in Fahrtrichtung (F) erfasst.

3. Steuerungsaufbau nach Anspruch 2, **dadurch gekennzeichnet, dass** zwei Mäheinheiten (16,16') je einen ersten (33,33')und je einen zweiten Sensor (45;45') aufweisen.

4. Steuerungsaufbau nach Anspruch 2 oder 3, **dadurch gekennzeichnet, dass** der µ-Controller (34) basierend auf den Vergleich der Pegelstände der Eingangssignale der ersten (33,33') und zweiten Sensoren (45;45') zwischen der Vorwärts- und Rückwärtsfahrt des Trägerfahrzeugs (1) aufnehmende Mäheinheiten (3;2:2;16;16') unterscheiden kann.

5. Steuerungsaufbau nach einem oder mehreren der vorhergehenden Ansprüche, **dadurch gekennzeichnet, dass** der µ-Controller (34) einen Daten-BUS (35) aufweist.

6. Steuerungsaufbau nach Anspruch 1, **dadurch gekennzeichnet, dass** der µ-Controller (34) Teil einer Mäheinheit (16,16') ist.

7. Steuerungsaufbau nach einem oder mehreren der vorhergehenden Ansprüche, **dadurch gekennzeichnet, dass** der µ-Controller (34) Teil des Trägerfahrzeugs (1) ist.

8. Steuerungsaufbau nach einem oder mehreren der vorhergehenden Ansprüche, **dadurch gekennzeichnet, dass** Größe und Wirkungsrichtung einer oder mehrer Verschiebkräfte (+K_{V},-K'_{V:},+K_{V1},-K'_{V1},K_{V2},K'_{V2},K_{V3},K'_{V3}) indirekt durch Abgriff eines hydrostatischen Drucks (P) eines hydrostatischen Systems einer Mäheinheit (3,4,4',16,16') von einem Sensor (33,33';45,45') erfasst werden.

9. Steuerungsaufbau nach einem oder mehreren der vorhergehenden Ansprüche, **dadurch gekennzeichnet, dass** das hydrostatische System der Mäheinheit (16,16') Teil einer Anfahr- und Überlastsicherung (14,14') ist.

10. Steuerungsaufbau nach einem oder mehreren der vorhergehenden Ansprüche, **dadurch gekennzeichnet, dass** ein Teil die Überlast oder Anfahrsicherung (14,14') aus einer Kolbenzylindereinheit eines Hydraulikzylinders (19,19') besteht.

11. Steuerungsaufbau nach einem oder mehreren der vorhergehenden Ansprüche, **dadurch gekennzeichnet, dass** der Hydraulikzylinder (19,19') gleichzeitig ein Verstellzylinder zum Verschwenken einer Seitenmäheinheit (16,16') um ein Kniegelenk (18,18') ist.

12. Steuerungsaufbau nach einem oder mehreren der vorhergehenden Ansprüche, **dadurch gekennzeichnet, dass** die Überlast oder Anfahrsicherung (14,14') wenigstens ein Druckbegrenzungsventil (29;30) umfasst.

13. Steuerungsaufbau nach einem oder mehreren der vorhergehenden Ansprüche, **dadurch gekennzeichnet, dass** die Überlast oder Anfahrsicherung (14,14') wenigstens einen µ-Controller (34) umfasst.

14. Steuerungsaufbau nach einem oder mehreren der vorhergehenden Ansprüche, **dadurch gekennzeichnet, dass** wenigstens einer der Sensoren (33,33',45,45') einen Dehnungsmessstreifen, eine Kraftmessdose oder einem hydrostatischen Druckschalter umfasst.

15. Steuerungsaufbau nach Anspruch 1, **dadurch gekennzeichnet, dass**, wenigstens ein Schwellwert (S,S₂) als variable Größe und Betriebsparameter fernverstellbar aus der Fahrerkabine (41) des Trägerfahrzeugs heraus veränderbar ist.

16. Steuerungsaufbau nach einem oder mehreren der vorhergehenden Ansprüche, **dadurch gekennzeichnet, dass** die Pegel der Schwellwerte (S,S₂) für Rückwärts- und/oder Vorwärtsfahrt in Fahrtrichtung (F) unabhängig voneinander verstell- und damit veränderbar sind.

17. Steuerungsaufbau nach einem oder mehreren der vorhergehenden Ansprüche, **dadurch gekennzeichnet, dass** die Aktoren zum Anheben der Mäheinheiten (3;2:2;16;16') von einer bodennahen in eine bodenfernere Lage Hydraulikzylinder sind.

18. Steuerungsaufbau nach einem oder mehreren der vorhergehenden Ansprüche, **dadurch gekennzeichnet, dass** die an einem µ-Controller (34) anliegenden Eingangssignale (36,36'45,45') der Sensoren (33,33',45,45') derart miteinander in eine logische Beziehung gebracht werden können, dass **dadurch** bei Einsetzten der Rückwärtsfahrt mehrere Ausgangssignale, (37₁₆, 37_{16',} 37₂, 37_{2',} 37₃,) generiert werden können und diese derart zur Wirkung gebracht werden können, dass entweder die beiden äußeren Mäheinheiten 16,16' einzeln oder gemeinsam oder die beiden äußeren Mäheinheiten 16,16' und die beiden mittleren Mäheinheiten 2,2' oder eben alle Mäheinheiten 3,2,2',16,16' gemeinsam und etwa zeitgleich oder zeitlich versetzt zueinander vom Boden in eine bodenfernere Lage angehoben werden können.

19. Steuerungsaufbau nach Anspruch 18, **dadurch gekennzeichnet, dass** unter Einbeziehung des Lenkwinkels des Lenkrades des Trägerfahrzeugs (1) das wahlweise Anheben von Mäheinheiten (3;2:2;16;16') in Kurvenfahrten erfolgen kann.
